Europäisches Patentamt

European Patent Office

Office européen des brevets

(11) Numéro de publication: **0 241 339 B1**

# FASCICULE DE BREVET EUROPEEN

(45) Date de publication de fascicule du brevet:
31.07.91

(51) Int. Cl.⁵: **H04N 5/217**

(21) Numéro de dépôt: 87400621.6

(22) Date de dépôt: **19.03.87**

(54) **Circuit de multiplexage pour dispositifs à transfert de charges.**

(30) Priorité: **28.03.86 FR 8604519**

(43) Date de publication de la demande:
**14.10.87 Bulletin 87/42**

(45) Mention de la délivrance du brevet:
**31.07.91 Bulletin 91/31**

(84) Etats contractants désignés:
**DE GB**

(56) Documents cités:
**US-A- 4 283 742**
**US-A- 4 287 441**

(73) Titulaire: **THOMSON-CSF**
**51, Esplanade du Général de Gaulle**
**F-92800 Puteaux(FR)**

(72) Inventeur: **Eouzan, Jean-Yves**
**Thomson-CSF SCPI 19, avenue de Messine**
**F-75008 Paris(FR)**
Inventeur: **Heurtaux, Jean-Claude**
**Thomson-CSF SCPI 19, avenue de Messine**
**F-75008 Paris(FR)**

(74) Mandataire: **Lincot, Georges et al**
**THOMSON-CSF SCPI**
**F-92045 PARIS LA DEFENSE CEDEX 67(FR)**

**Description**

La présente invention concerne un circuit de multiplexage pour dispositifs à transfert de charges.

Dans les dispositifs à transfert de charges employés en télévision, des charges électriques représentant les valeurs du signal de luminance sont injectées dans des condensateurs et les tensions développées aux bornes de ceux-ci sont appliquées à des dispositifs extérieurs au travers de circuits à haute impédance d'entrée.

Entre deux injections de charges une tension d'initialisation est appliquée aux bornes de condensateurs pour fixer le niveau du noir du signal de luminance.

Cette opération donne au signal délivré une structure discontinue.

En principe cette tension de noir devrait conserver une valeur déterminée constante après chaque période d'initialisation.

On constate cependant qu'à son niveau se superpose d'une part, une tension parasite qui est engendrée par une impulsion de signal transmise par des couplages capacitifs existant au sein du substrat entre le condensateur et l'électrode de commande du transistor qui applique la tension d'initialisation et d'autre part, un signal de bruit provenant de différentes sources extérieures ou intérieures.

Il est connu principalement des brevets US-A-4 283 742 et US-A-4 287 441 d'utiliser des circuits échantillonneurs bloqueurs couplés à un circuit soustracteur pour éliminer les pointes de bruit entachant le signal fourni par des imageurs à cellules photoélectrique ou CCD. Mais ces circuits ne permettent pas d'aligner le niveau de noir de signaux vidéo, principalement par le fait que, la commande des circuits échantillonneurs n'est pas synchronisée sur les instants d'apparition des niveaux de noir et de blanc. De la sorte, la mémorisation du niveau de noir n'est pas assurée et d'autre part, les lignes à retard utilisées dans ces circuits paraissent difficilement exploitables pour obtenir des décalages précis entre des impulsions d'échantillonnage des niveaux de noir et de blanc à la fréquence point du signal de télévision lorsque la résolution entre points des dispositifs à transfert de charge augmente.

Ces phénomènes sont d'autant plus gênants que la composante de luminance du signal est faible. Les signaux liés à l'initialisation devenant alors généralement plus importants en amplitude que le signal vidéo lui-même, ils provoquent une mauvaise restitution des gris de l'image, et sont la cause d'autres nuisances lorsque notamment , les signaux provenant des N sorties d'un ou plusieurs dispositifs à transfert de charges sont multiplexés dans le temps, car dans ce dernier cas les différences de niveau de noir et les différences de sensibilité des dispositifs engendrent des signaux parasites d'amplitude variable dans le temps à la fréquence de multiplexage, l'amplitude de ces variations correspondant aux décalages en tension des N niveaux du noir, ou des N niveaux de luminance.

Il serait par conséquent judicieux, pour exploiter au mieux, en les multiplexant, les signaux délivrés par les N voies ou dispositifs à transfert de charges, de procéder à différents traitements visant à améliorer la qualité de chaque signal pris isolément et celle du multiplexage des N signaux.

En ce qui concerne la qualité de chaque signal pris isolément diverses améliorations pourraient être apportées en éliminant, par exemple par "échantillonnage et maintien", de la structure discontinue et la tension parasite de réinitialisation et en éliminant partiellement les signaux de bruits générés par les sources extérieures ou intérieures, mais il faudrait en même temps éliminer les signaux parasites résiduels générés par l'opération "d'échantillonnage et maintien".

En outre, en ce qui concerne la qualité du multiplexage des N signaux, celle-ci pourrait être obtenue par ajustage automatique des N tensions de noir et des N gains des N voies pour obtenir des tensions de luminance identiques.

Le but de l'invention est de procéder aux traitements cités.

A cet effet, l'invention a pour objet, un circuit de multiplexage de signaux de télévision pour dispositifs à transfert de charges tel que défini à la revendication 1.

Le circuit de multiplexage selon l'invention a pour principal avantage qu'il permet de réaliser un multiplexage de plusieurs signaux avec un alignement parfait du niveau des noirs en éliminant d'une part, les signaux parasites à fréquence point présents dans le signal issu du dispositif à transfert de charges et d'autre part, les signaux résiduels d'échantillonnage et le bruit basse fréquence.

D'autres caractéristiques et avantages de l'invention apparaîtront au cours de la description qui suit faite en regard des dessins annexés qui représentent :
- la figure 1 le schéma de principe de l'étage de conversion charge-tension électrique d'un dispositif à transfert de charges ;
- la figure 2 un graphe des temps correspondant au fonctionnement du dispositif représenté à la figure 1 ;
- la figure 3 un schéma de réalisation d'une voie d'un élément de circuit de multiplexage selon

EP 0 241 339 B1

l'invention ;
- la figure 4 un chronogramme illustrant le fonctionnement du circuit de traitement du signal de la figure 3 ;
- la figure 5 un mode de réalisation complet du circuit de multiplexage selon l'invention.

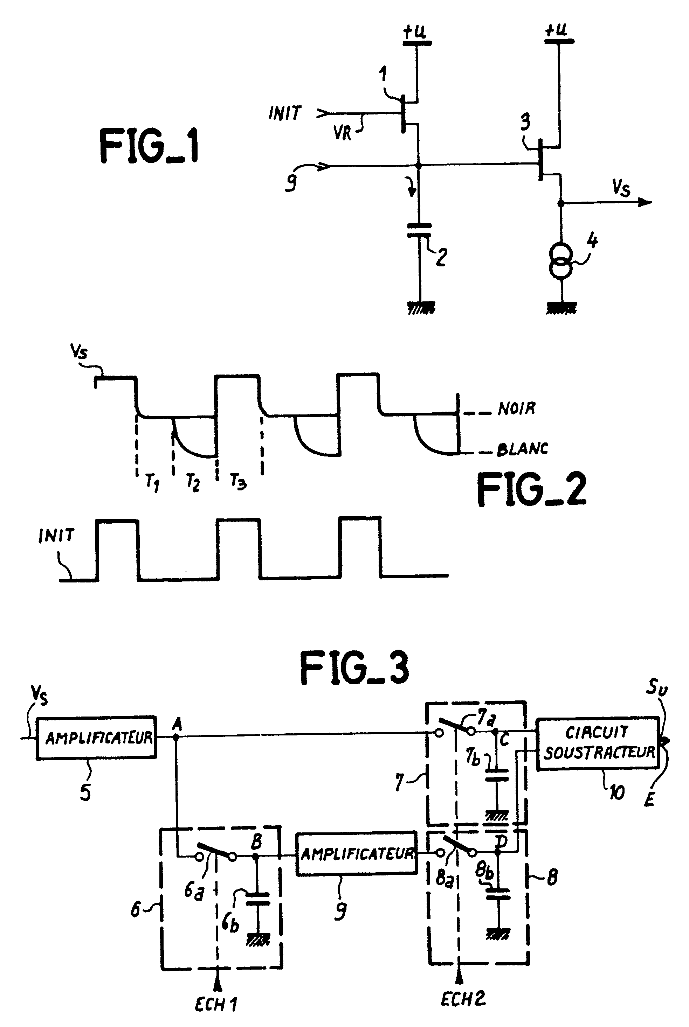

L'étage de conversion charge-tension électrique qui est représenté à la figure 1 comprend un transistor à effet de champ 1, relié en série à un condensateur 2 entre un potentiel + U d'alimentation et un point de masse M. Le point commun entre la source du transistor 1 avec le condensateur 2, est relié à la grille de commande d'un transistor à effet dechamp 3 qui est alimenté sur sa source par une source de courant 4. Dans le dispositif à transfert de charges qui est ainsi représenté des charges électriques q à transférer sont appliquées au point commun entre le transistor 1 et le condensateur 2. Celles-ci développent une tension aux bornes du condensateur 2. Entre deux injections de charges le condensateur 2 est réinitialisé avec une tension de référence par la mise en conduction du transistor 1 qui reçoit sur sa grille un signal d'initialisation INIT d'amplitude VR . Le signal développé aux bornes du condensateur 2 est recopié par le transistor 3 qui restitue un signal VS aux bornes de la source de courant 4. Le transistor 3 permet ainsi la lecture à haute impédance du signal qui est contenu dans le condensateur 2.

Une représentation sous la forme d'un diagramme de temps du signal VS est montré à la figure 2. Le signal VS représenté se compose de trois parties principales qui apparaissement régulièrement au cours d'intervalles de temps $T_1$ , $T_2$ et $T_3$ qui sont représentés juxtaposés dans cet ordre sur la figure 2.

La partie de signal VS referençant le niveau du noir apparaît durant l'intervalle de temps $T_1$ . La partie du signal utile transportant la composante de luminance apparaît au cours de l'intervalle de temps $T_2$ . Enfin la partie du signal qui apparaît durant l'intervalle de temps $T_3$ est provoquée par l'impulsion d'initialisation qui est appliquée sur la grille du transistor 1. Pendant l'intervalle de temps $T_2$ l'amplitude du signal VS peut varier entre le niveau de référence du noir lorsqu'aucune charge n'est injectée dans le condensateur 2 et jusqu'à un niveau maximal correspondant à un niveau de blanc lorsque les charges injectées dans le condensateur 2 développent une tension maximale négative. La partie apparaissant durant l'intervalle de temps $T_3$ devrait théoriquement avoir le même niveau que la partie apparaissant durant l'intervalle de temps $T_1$ car elle correspond à la phase d'initialisation mais on constate qu'une impulsion parasite est ajoutée au signal pendant la durée de cette initialisation, cette impulsion étant due au couplage capacitif existant entre le condensateur 2 et l'électrode de commande du transistor 1.

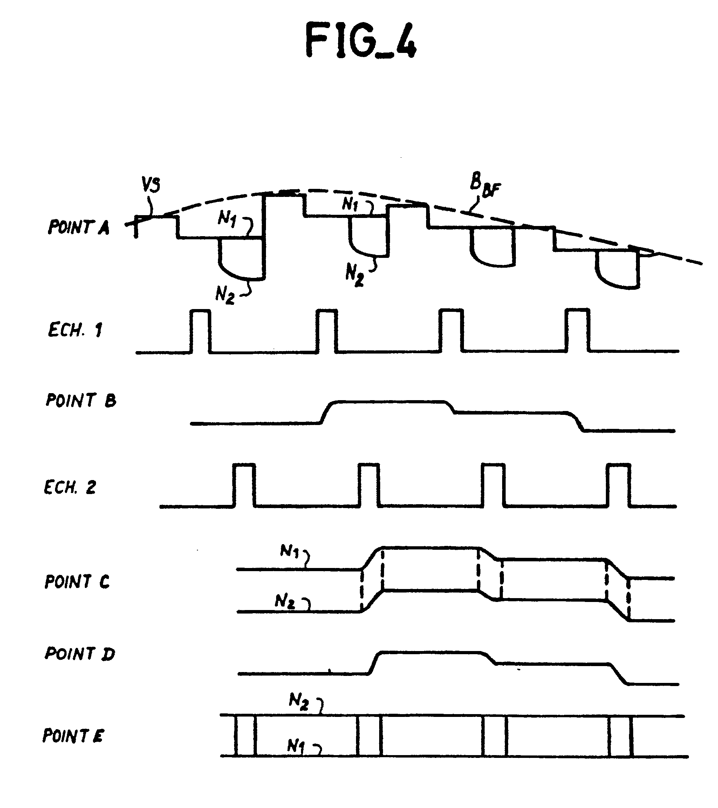

Cette difficulté est surmontée grâce au dispositif qui est représenté à la figure 3. Le dispositif représenté comprend un premier amplificateur 5, des premier, deuxième et troisième circuits échantillonneurs-bloqueurs, portant respectivement les références 6, 7, 8, un amplificateur 9 et un circuit soustracteur 10. L'amplificateur 5 reçoit sur son entrée le signal VS de la figure 2 fourni par le dispositif à transfert de charges, décrit précédemment à l'aide de la figure 1, à la sortie duquel il est connecté. La sortie (point A) du circuit amplificateur 5 est reliée, d'une part, à l'entrée du premier circuit échantillonneur-bloqueur 6 et d'autre part, à l'entrée du deuxième circuit échantillonneur-bloqueur 7. La sortie (point B) du premier circuit échantillonneur-bloqueur 6 est reliée à l'entrée du troisième échantillonneur-bloqueur 8 par l'intermédiaire du circuit amplificateur 9. Les sorties des deuxième (point C) et troisième (point D) échantillonneur-bloqueur 7 et 8 sont reliées respectivement aux entrées marquées " + " et "-" du circuit soustracteur 10. Chacun des circuits échantillonneur-bloqueur 6, 7, 8 est constitué de façon connue par des interrupteurs de courant à transistors à effet de champs ou équivalents notés respectivement 6a, 7a, 8a, et par des condensateurs référencés respectivement 6b, 7b, et 8b. Le condensateur 7b est branché entre l'entrée marquée " + " du circuit soustracteur 10 et la ligne de masse M. Le condensateur 6b est relié entre l'entrée du circuit amplificateur 9 et la ligne de masse M. Le condensateur 8b est relié entre l'entrée marquée "-" du circuit soustracteur 10 et la ligne de masse M. Le circuit interrupteur 7a réalise la connexion de la sortie du circuit amplificateur 5 avec d'une part, l'entrée marquée " + " du circuit soustracteur 10 et d'autre part, l'extrémité correspondante du condensateur 7b. Le circuit interrupteur 6a réalise la connexion entre la sortie du circuit amplificateur 5 avec d'une part, l'entrée du circuit amplificateur 9 et l'extrémité correspondante du condensateur 6b. Enfin l'interrupteur de courant 8a réalise la connexion entre la sortie du circuit amplificateur 9 avec d'une part, l'entrée marquée "-" du circuit soustracteur 10 et d'autre part, l'extrémité correspondante du condensateur 8b.

L'interrupteur de courant 6a est commandé par un signal d'échantillonnage $ECH_1$ et les interrupteurs de courant 7a et 8a sont commandés simultanément par un signal d'échantillonnage $ECH_2$ dont les positions relatives dans le temps par rapport au signal d'entrée VS sont représentées à la figure 4. Le signal VS représenté à la figure 4 a la forme du signal vidéofréquence de la figure 2 à la différence toutefois qu'il lui est rajouté une composante de bruit $B_{BF}$ basse fréquence dont l'enveloppe est représentée en pointillés. Le signal qui est représenté en-dessous du signal VS est le signal d'échantillonnage $ECH_1$ qui commande la fermeture de l'interrupteur de courant 6a à chaque apparition du niveau de noir du signal VS. Le signal

3

échantillonné représentant les niveaux de noir du signal VS qui est appliqué sur l'entrée de l'amplificateur 9 est représenté à la ligne suivante sous la forme de paliers représentant les niveaux successifs de noir du signal VS. Le signal $ECH_2$ , qui est représenté à la ligne suivante et qui commande la fermeture des interrupteurs de courant 7a et 8a, apparaît simultanément aux instants d'apparition du signal de luminance du signal VS et les échantillons obtenus qui sont mémorisés dans le condensateur 7b branché à l'entrée marquée " + " du circuit soustracteur 10, sont représentés à la ligne suivante sous la forme de deux signaux juxtaposés correspondant, dans l'exemple de représentation du signal VS, à deux niveaux $N_1$ , $N_2$ , $N_1$ correspondant à du noir (luminance minimale) et $N_2$ à du blanc (luminance maximale). La ligne suivante représente le signal qui est appliqué à l'entrée marquée "-" du soustracteur 10 et qui correspond au transfert des niveaux du signal, mémorisés dans le condensateur 6b, dans le condensateur 8b aux instants d'échantillonnage $ECH_2$ . Enfin sur la dernière ligne sont représentés les signaux correspondant aux niveaux $N_1$ , $N_2$ , de luminance du signal VS représenté sur la première ligne et qui apparaissent en sortie du circuit soustracteur 10 (point E).

En désignant par $B_{BF}$ la composante de bruit basse fréquence, par $PAR_1$ le signal parasite fourni par le circuit échantillonneur-bloqueur 6b, par $PAR_2$ le signal parasite fourni respectivement par chacun des circuits échantillonneurs-bloqueurs 7b et 8b et par $S_u$ le signal utile formé par les composantes de luminance du signal VS, le fonctionnement du circuit de la figure 3 peut être explicité à l'aide de ces notations de la façon suivante. Le signal qui est mémorisé dans le condensateur 6b par le circuit échantillonneur-bloqueur 6 contient l'information bruit basse fréquence $B_{BF}$ auquel s'ajoute le signal parasite $PAR_1$ . Le signal qui est mémorisé dans le condensateur 7b par le circuit échantillonneur-bloqueur 7 contient l'information de signal utile $S_u$ auquel s'ajoute le bruit basse fréquence $B_{BF}$ et le signal parasite fourni par l'échantillonneur-bloqueur 7. Le signal qui est mémorisé dans le condensateur 8b de l'échantillonneur-bloqueur 8 contient le bruit basse fréquence $B_{BF}$ auquel s'ajoute le signal parasite $PAR_2$ fourni par le circuit échantillonneur-bloqueur 8, le signal parasite $PAR_1$ ayant été éliminé par l'échantillonneur-bloqueur 8. Le circuit soustracteur 10 qui effectue la soustraction entre l'amplitude du signal qui est mémorisé dans le condensateur 7b et l'amplitude du signal qui est mémorisé dans le condensateur 8b fournit dans ces conditions un signal qui vérifie la relation

$$(S_u + B_{BF} + PAR_2) - (B_{BF} + PAR_2) = S_u$$

Le signal fourni par la sortie du circuit soustracteur 10 apparait par conséquent débarrassé des composantes de bruit et des parasites transmis par les différents échantillonneurs-bloqueurs. L'alignement du noir pour chaque échantillonnage du signal de luminance est donc dans ces conditions bien réalisé.

Pour exploiter au mieux, en les multiplexant, les signaux délivrés par les N voies ou dispositifs à transfert de charges, il est nécessaire de procéder aux différents traitements suivants :

En ce qui concerne la qualité de chaque signal pris isolément il faut :
- éliminer par échantillonnage et maintien la structure discontinue du signal et de la tension parasite de réinitialisation.
- éliminer partiellement les signaux de bruits générés par les sources extérieures ou intérieures.
- éliminer les signaux parasites résiduels générés par l'opération d'échantillonnage et maintien,
- et en outre, en ce qui concerne la qualité du multiplexage de N signaux il faut :
- ajuster automatiquement les N tensions de noir,
- ajuster les N gains des voies pour obtenir des tensions de luminance identiques.

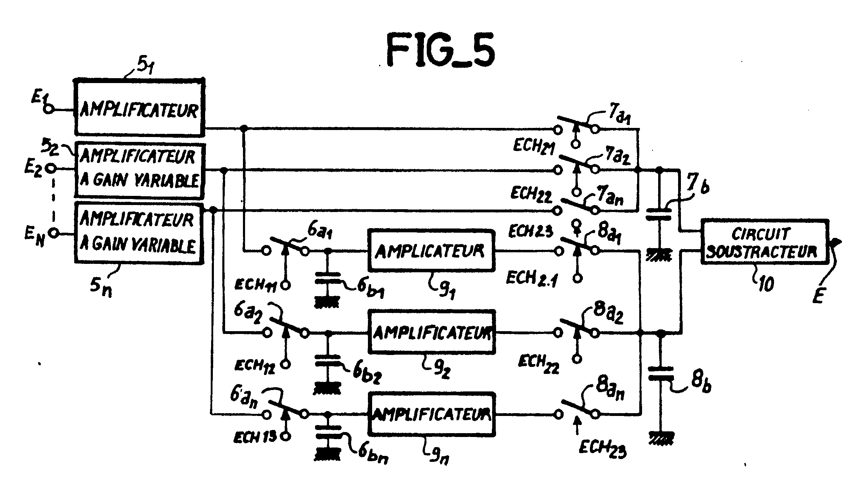

Le principe du traitement de signal mis en oeuvre par le circuit représenté à la figure 3 peut être avantageusement étendu au multiplexage avec alignement des noirs de plusieurs signaux vidéo fournis par plusieurs dispositifs à transfert de charges ou par un dispositif à n sorties démultiplexées de la manière qui est représentée à la figure 5 qui réalise un circuit de multiplexage à n entrées selon l'invention. Dans le circuit représenté, chaque signal appliqué sur une entrée $E_1$ à $E_n$ est amplifié de telle sorte qu'il délivre pour un même niveau de signal à l'entrée du dispositif un signal d'amplitude égale et est traité par un circuit formé par les mêmes éléments que le circuit représenté à la figure 3. Il en résulte que pour réaliser le multiplexage des signaux $E_1$ à $E_n$ il est nécessaire de prévoir n amplificateurs à gain variable $5_1$ à $5_n$ , 3 × n interrupteurs, $6a_1$ ... $6a_n$ , $7a_1$ ... $7a_n$ , $8a_1$ ... $8a_n$ pour constituer n dispositifs du type de celui représenté à la figure 3 disposés sur chacune des voies de multiplexage, comme il est également nécessaire de prévoir n amplificateurs $9_1$ ... $9_n$ pour séparer chaque deuxième circuit et troisième circuit échantillonneur-bloqueur. Comme dans la structure ainsi réalisée chacun des condensateurs des deuxièmes circuits échantillonneurs-bloqueurs se retrouve placé en parallèle à l'entrée marquée " + " d'un seul circuit soustracteur 10, l'ensemble de ces condensateurs est remplacé par un condensateur unique 7b et 8b aux entrées marquées " + " et "-" du circuit soustracteur 10.

Il est également nécessaire de placer n condensateurs $6b_1$ à $6b_n$ aux entrées respectives des n amplificateurs $9_1$ à $9_n$ pour constituer les n premiers circuits d'échantillonneurs-bloqueurs ($6_1$ ... $6_n$). Il va de soi que chacune des n voies de multiplexage qui sont ainsi réalisées pourra être commandée par des signaux de commande supplémentaires venant se rajouter aux signaux d'échantillonnage $ECH_1$ et $ECH_2$ précédemment décrits et qui devront être prévus en fonction des multiples applications que pourra recevoir l'invention précédemment décrite.

Le fonctionnement du circuit de multiplexage de la figure 5 est le suivant. Un des amplificateurs d'entrée $5_1$ étant pris en référence, le gain de chacun des (n-1) autres amplificateurs d'entrée $5_2$ à $5_n$ est réglé de telle sorte qu'il délivre un signal de même niveau que celui de l'amplificateur pris en référence $5_1$, pour des signaux d'entrée des dispositifs d'amplitudes égales. Les n interrupteurs $6a_1$ à $6a_n$ transmettent les références de noir ainsi que les n informations de bruit

$$B_{BF_1} \text{ à } B_{BF_n}$$

aux n condensateurs de mémorisation $6b_1$ à $6b_n$.

Ces informations sont retransmises séquentiellement par les interrupteurs $8a_1$ à $8a_n$ au condensateur unique de mémorisation des noirs 8b aux bornes duquel se trouve donc le signal multiplexé dans le temps (noir + $B_{BF}$ + $PAR_2$), $PAR_2$ étant le signal parasite résiduel généré par les échantillonneurs $8a_1$ à $8a_n$.

Dans le même temps, les interrupteurs $7a_1$ à $7a_n$ étant commandés deux par deux en synchronisme avec les interrupteurs $8a_1$ à $8a_n$, les n interrupteurs $7a_1$ + $7a_n$ transmettent séquentiellement les n informations de luminance

$$S_{u_1} \text{ à } S_{u_n}$$

ainsi que les n informations de bruit

$$B_{BF_1} \text{ à } B_{BF_2}$$

au condensateur unique de mémorisation de luminance 6b, aux bornes duquel se trouve donc le signal multiplexé dans le temps ($S_u$ + $B_{BF}$ + $PAR_2$), $PAR_2$ étant le signal parasite résiduel généré par les échantillonneurs $7a_1$ à $7a_n$.

Le circuit soustracteur 10 qui effectue la soustraction entre l'amplitude du signal qui est mémorisé dans le condensateur 6b et l'amplitude du signal qui est mémorisé dans le condensateur 8b fournit dans ces conditions un signal qui vérifie à chaque instant la relation :

$$(S_{u_n} + B_{BF_n} + PAR_{2_n}) - (B_{BF_n} + PAR_{2_n}) = S_u$$

Le signal fourni par la sortie du circuit soustracteur 10 est donc un signal multiplexé dans le temps résultant des n signaux délivrés par les n sorties de dispositifs, et qui présente les caractéristiques suivantes :
- niveaux de noir alignés
- amplitudes de luminance égales (pour des signaux égaux aux entrées des dispositifs)
- bruit basse fréquence éliminé
- structure discontinue éliminée
- parasites résiduels d'échantillonnage éliminés.

## Revendications

1. Circuit de multiplexage à n voies de signaux de télévision émis par des dispositifs à transfert de charges caractérisé en ce qu'il comprend d'une part, dans chacune des voies

un premier circuit échantillonneur-bloqueur (6) pour mémoriser le niveau du noir du signal fourni à la fréquence point du signal de télévision

un deuxième circuit échantillonneur-bloqueur (7) pour mémoriser l'amplitude du signal

un troisième circuit échantillonneur-bloqueur (8) pour mémoriser à l'instant d'échantillonnage du deuxième circuit échantillonneur le niveau de noir mémorisé dans le premier circuit échantillonneur (6)

et d'autre part, commun à toutes les voies, un circuit soustracteur (10), les sorties des n deuxièmes circuits échantillonneurs-bloqueurs (7) étant reliées entre elles et à la première entrée d'opérande du circuit soustracteur (10) et les sorties des n troisièmes circuits échantillonneurs-bloqueurs (8) étant reliées entre elles et à la deuxième entrée d'opérande du circuit soustracteur (10).

2. Circuit selon la revendication 1, caractérisé en ce que chaque premier, deuxième et troisième circuit échantillonneur-bloqueur comprend un interrupteur (6a, 7a, 8a) de courant relié à un condensateur (6b, 7b, 8b) pour charger le condensateur à des instants d'échantillonnage déterminés.

3. Circuit selon la revendication 2, caractérisé en ce que chaque interrupteur de courant est constitué par un transistor à effet de champ.

4. Circuit selon l'une quelconque des revendications 1 et 2, caractérisé en ce que le premier circuit échantillonneur-bloqueur (6) est commandé aux instants d'apparition du niveau de noir dans le signal de télévision et que les deuxième et troisième circuits échantillonneurs-bloqueurs (7, 8) sont commandés aux instants d'apparition du signal de luminance du signal de télévision.

5. Circuit selon l'une quelconque des revendications 1 à 4, caractérisé en ce que chaque signal à multiplexer est transmis aux entrées respectives des premier et deuxième circuits échantillonneurs-bloqueurs (6, 7) par l'intermédiaire d'au moins un amplificateur (5).

## Claims

1. A multiplexing circuit with n paths for television signals from charge transfer devices, characterized in that on the one hand it comprises, in each of the paths:

   a first sampling and blocking circuit (6) in order to store the black level of the signal supplied at the point frequency of the television signal,

   a second sampling and blocking circuit (7) in order to store the amplitude of the signal,

   a third sampling and blocking circuit (8) in order to store, at the instant of sampling by the second sampling circuit, the black level stored in the first sampling circuit (6),

   and on the other hand, common to all the paths, a subtracting circuit (10), the outputs of the n sampling and blocking circuits (7) being connected with each other and with the first operand input of the subtracting circuit (10) and the outputs of the n third sampling and blocking circuits (8) being connected with each other and with the second operand input of the subtracting circuit (10).

2. The circuit as claimed in claim 1, characterized in that each first, second and third sampling and blocking circuit comprises a current switch (6a, 7a and 8a) connected with a capacitor (6b, 7b and 8b) in order to charge the capacitor at predetermined sampling instants.

3. The circuit as claimed in claim 2, characterized in that each current switch is constituted by a field effect transistor.

4. The circuit as claimed in claim 1 or claim 2, characterized in that the first sampling and blocking circuit (6) is driven at the instants of the appearance of the black level in the television signal and in that the second and third sampling and blocking circuits (7 and 8) are driven at the instants of the appearance of the luminance signal of the television signal.

5. The circuit as claimed in any one of the preceding claims 1 through 4, characterized in that each signal to be multiplexed is transmitted to the respective inputs of the first and second sampling and blocking circuits (6 and 7) by the intermediary of at least one amplifier (5).

## Patentansprüche

1. Multiplexschaltung mit n Kanälen für Fernsehsignale, die von Ladungsübertragungsvorrichtungen ausgesandt werden, dadurch gekennzeichnet, daß sie einerseits in jedem Kanal
eine erste Abtast/Halte-Schaltung (6) zum Speichern des Schwarzpegels des mit der Punktfrequenz des Fernsehsignals gelieferten Signals,
eine zweite Abtast/Halte-Schaltung (7) zum Speichern der Amplitude des Signals,
eine dritte Abtast/Halte-Schaltung (8) zum Speichern des in der ersten Abtast-Schaltung (6) gespeicherten Schwarzpegels zum Zeitpunkt der Abtastung der zweiten Abtastschaltung
und andererseits eine allen Kanälen gemeinsame Subtrahierschaltung (10) aufweist, wobei die n zweiten Abtast/Halte-Schaltungen (7) miteinander und mit dem ersten Operandeneingang der Subtrahierschaltung (10) verbunden sind und wobei die Ausgänge der n dritten Abtast/Halte-Schaltungen (8) miteinander und mit dem zweiten Operandeneingang der Subtrahierschaltung (10) verbunden sind.

2. Schaltung gemäß Anspruch 1, dadurch gekennzeichnet, daß jede erste, zweite und dritte Abtast/Halte-Schaltung einen Stromunterbrecher (6a, 7a, 8a) aufweist, der jeweils mit einem Kondensator (6b, 7b, 8b) verbunden ist, um den Kondensator in bestimmten Abtastzeitpunkten zu laden.

3. Schaltung gemäß Anspruch 2, dadurch gekennzeichnet, daß jeder Stromunterbrecher durch einen Feldeffekttransistor gebildet wird.

4. Schaltung gemäß einem der Ansprüche 1 und 2, dadurch gekennzeichnet, daß die erste Abtast/Halte-Schaltung (6) in den Zeitpunkten des Auftretens des Schwarzpegels im Fernsehsignal gesteuert wird und daß die zweiten und die dritten Abtast/Halte-Schaltungen (7, 8) in den Zeitpunkten des Auftretens des Leuchtdichtesignals des Fernsehssignals gesteuert werden.

5. Schaltung gemäß einem der Ansprüche 1 bis 4, dadurch gekennzeichnet, daß jedes dem Multiplexbetrieb zu unterziehendes Signal über wenigstens einen Verstärker (5) an die entsprechenden Eingänge der ersten und der zweiten Abtast/Halte-Schaltungen (6, 7) übertragen wird.

EP 0 241 339 B1

FIG_1

FIG_2

FIG_3

# FIG_4

FIG_5